# EUROPÄISCHE PATENTSCHRIFT

(11) **EP 2 998 622 B1**
(45) Veröffentlichungstag und Bekanntmachung des Hinweises auf die Patenterteilung: **02.10.2019**
(21) Anmeldenummer: 15185405.6
(22) Anmeldetag: 16.09.2015
(51) Int. Cl.: F16K 11/065, F16K 11/074, F16K 21/10

(54) **VENTILKARTUSCHE FÜR EINE SANITÄRARMATUR**
VALVE CARTRIDGE FOR A SANITARY FITTING
CARTOUCHE DE SOUPAPE POUR UNE ARMATURE SANITAIRE

(30) Priorität: 17.09.2014 DE 102014113386
(43) Veröffentlichungstag der Anmeldung: 23.03.2016
(73) Patentinhaber: Franke Aquarotter GmbH, 14974 Ludwigsfelde (DE)
(72) Erfinder:
(74) Vertreter: Lemcke, Brommer & Partner Patentanwälte Partnerschaft mbB

(56) Entgegenhaltungen:
- DE-A1- 2 926 374
- DE-A1- 4 033 733
- DE-A1- 19 923 988
- US-A- 2 988 110

## Beschreibung

Die vorliegende Erfindung betrifft eine Ventilkartusche für eine Sanitärarmatur, vorzugsweise mit keramischen Ventilscheiben sowie eine Sanitärarmatur mit einer solchen Ventilkartusche.

Ventilkartuschen sind integrierte Einsätze, die als Einheit dichtend in ein meist wasserführendes Gehäuse einer Sanitärarmatur eingesetzt werden. Eine Ventilkartusche wird für eine bestimmte Anwendung bzw. eine bestimmte Armaturenform ausgelegt und entwickelt. So gibt es unterschiedliche Ventilkartuschen für Mischerarmaturen, Selbstschlussarmaturen, jeweils mit oder ohne Mischerfunktion, elektrisch betätigte Armaturen etc.

Bei Einhebelmischern kommen seit längerem keramische Dichtscheiben zum Einsatz, die aufgrund ihrer Härte und Passgenauigkeit hohe Standzeiten gewährleisten und zu einem wartungsfreien Betrieb führen.

Selbstschlussarmaturen werden dagegen bis heute nach wie vor als Sitz-Armaturen gebaut, bei denen ein mit einer elastischen Dichtung versehenes Schließelement gegen einen Ventilsitz gehalten wird. Solche Selbstschlussarmaturen arbeiten mit einer Gegendruckkammer, welche zum Öffnen des Ventils entleert wird und sich dann langsam wieder mit Leitungswasser füllt, bis der Leitungsdruck in der Gegendruckkammer das Ventil wieder verschließt. Sitzventile sind einerseits wartungsanfällig und haben eine vergleichbar kurze Lebensdauer. Anderseits kann das in der Gegendruckkammer vorhandene Stagnationswasser bei längerer Nichtbenutzung zu Keimbildung neigen und zu hygienischen Problemen führen.

Die US 2,988,110 A zeigt eine Selbstschlussarmatur, die zur Mischung von warmem und kaltem Wasser geeignet ist, und einen Schließantrieb für einen Selbstschluss umfasst. Die DE 4 033 733 A1 offenbart eine selbstschließende Mischbatterie mit keramischen Dichtscheiben. Aus der DE 199 23 988 A1 ist ein Einhebelmischer mit keramischen Dichtscheiben bekannt, bei dem der Betätigungshebel als Hohlkörper ausgeführt ist, in welchem eine Selbstschlusseinrichtung untergebracht ist. Diese besteht aus einem mit Hydrauliköl gefüllten Dämpfer und einer Rückstellfeder, durch welche
der Mischerhebel selbsttätig von einer Öffnungsstellung zurück in eine Schließstellung bewegt wird und dabei die Armatur schließt. Allerdings erfordert die Rückstellung des Bedienhebels hohe Rückstellkräfte, so dass das selbsttätige Schließen der Armatur störanfällig ist und ein Benutzer eine entsprechend hohe Kraft zum Öffnen der Armatur aufwenden muss. Mit dem üblichen Funktionsprinzip von Selbstschlussarmaturen, bei denen der Benutzer zum Öffnen des Ventils ein Betätigungselement herunterdrücken muss, ist dieses Prinzip nicht vereinbar.

Eine Aufgabe der vorliegenden Erfindung besteht darin, eine universell einsetzbare Ventilkartusche zu schaffen, welche für eine Vielzahl unterschiedlicher Sanitärarmaturen mit unterschiedlichen Funktionen eingesetzt werden kann.

Dies wird erfindungsgemäß durch eine Ventilkartusche mit modularem Aufbau erreicht, bei der eine zentrale Ventileinheit mit einem beweglichen, einen Wasserfluss wahlweise versperrenden oder freigebenden, keramischen Ventilelement vorgesehen ist, und ein stabförmiges Stellelement, welches an das Ventilelement angreift, um dieses von einer Schließstellung in eine Öffnungsstellung oder umgekehrt zu bewegen. Hierbei durchquert das Stellelement die Ventileinheit in einer axialen Richtung und ist an seinen beiden Enden mit einer weiteren Baugruppe zusammenwirkbar ausgebildet. Erfindungsgemäß wirkt das Stellelement mit dem Ventilelement derart zusammen, dass es ein Linearbewegung auf das bewegliche Ventilelement überträgt während es in Rotationsrichtung drehfrei gegenüber dem beweglichen Ventilelement gelagert ist, so dass eine Rotationsbewegung auf eine der weiteren Baugruppen übertragen werden kann.

An dem einen, vorzugsweise dem oberen, Ende des stabförmigen Stellelements kann eine Betätigungseinheit mit dem Stellelement zusammenwirkend verbunden werden und am anderen Ende kann eine mechanische Mischerbaugruppe oder Thermostatmischerbaugruppe mit dem Stellelement zusammenwirkend verbunden werden. Durch Wahl unterschiedlicher Betätigungseinheiten sowie Mischerbaugruppen oder Weglassen bzw. Ersetzen letzterer durch ein Leerelement kann die Ventilkartusche für unterschiedliche Einsatzbereiche ausgerüstet werden. So kann es sich bei der Betätigungseinheit beispielsweise um einen Schließantrieb für eine Selbstschlussarmatur oder auch um einen Stellantrieb für eine elektrisch betätigte Armatur handeln.

Bei einer bevorzugten Ausführungsform kann die Sanitärarmatur mit einer mechanischen Mischerbaugruppe ausgestattet werden. Eine solche Mischerbaugruppe umfasst ein drehbares Mischerbauteil und kann mit der erfindungsgemäßen Ventilanordnung über das Stellelement koaxial gekoppelt werden, indem dieses Linearbewegungen auf die bewegliche Ventilscheibe und eine Rotationsbewegungen auf das drehbare Mischerbauteil überträgt.

Vorzugsweise umfasst die Ventilkartusche ein Gehäuse, das an seinem oberen und/oder unteren Ende mechanische Verbindungsmittel zum Anschluss von der bzw. den weiteren Baugruppen aufweist. Solche Verbindungsmittel können durch Klips- oder Rastelemente, Gehäusenasen, aufeinander steckbare Gehäuseteile passenden Durchmessers oder ähnlichem gebildet werden und ermöglichen einen einfachen und sicheren Zusammenbau des modularen Ventilkartusche. Hierbei wird somit nicht nur eine Verbindung zwischen den Baugruppen und dem im Inneren der Kartusche verlaufenden stabförmigen Stellelement zu deren Betätigung, sondern zusätzlich eine gehäuseseitige mechanische Verbindung erreicht.

Bei einer bevorzugten Ausführungsform ist die Ventileinheit mit einem Schließantrieb ausgestattet, welcher an einem oberen Ende des Stellelements mit diesem zusammenwirkend angeordnet ist. Der Schließantrieb umfasst einen Dämpfer mit einem beweglichen Dämpferorgan, das von einer Ausgangslage in eine Endlage auslenkbar und mit einem Stellelement zum Öffnen und Schließen des Ventils verbunden ist. Wird das Dämpferorgan in die Endlage ausgelenkt, so bewegt es sich durch eine von einem Kraftspeicher ausgeübte Rückstellkraft gegen den Widerstand des Dämpfers selbsttätig zurück in seine Ausgangslage. Dabei führt das Stellelement zunächst einen Leerhub aus, bevor ein am Stellelement vorgesehenes Mitnehmerorgan eine Schließbewegung des Ventils bewirkt. Durch den Leerhub wird eine Phase gleichbleibenden Wasserflusses realisiert.

Außerdem kann der Dämpfer zusätzlich so ausgebildet werden, dass seine Dämpfungskraft im Anschluss an den Leerhub zumindest vermindert ist. Hierdurch wird erreicht, dass der Schließvorgang nach der Phase gleichbleibenden Wasserflusses beschleunigt erfolgt, so dass kein langes Nachlaufen der Armatur auftritt.

Bei einer bevorzugten Ausführungsform umfasst der Dämpfer einen Hydraulickolben, der in einem mit einem Hydraulikmittel gefüllten Hydraulikzylinder läuft und bei einer Rückbewegung zurück in die Ausgangslage Hydraulikmittel verdrängt, welches hierbei durch eine Engstelle hindurchfließen muss. Die Verwendung eines geschlossenen hydraulischen Dämpfers ermöglicht einen kostengünstigen, langlebigen und zuverlässigen Aufbau des Schließantriebs und ist insbesondere für die Verwendung in Selbstschlussarmaturen geeignet. Durch Vermeidung von Stagnationswasser erfüllt die Sanitärarmatur gegenüber herkömmlichen Selbstschlussarmaturen mit Gegendruckkammer höhere Hygienestandards.

Die genannte Verringerung der Dämpfungskraft im Anschluss an den Leerhub kann bei einem derartigen hydraulischen Dämpfer dadurch verringert werden, dass der Hydraulikzylinder in einem Bereich vor der Ausgangslage einen erweiterten Durchmesser aufweist, so dass seine Dämpfungskraft in diesem Bereich vermindert ist.

Bei einer besonders bevorzugten Ausführungsform verläuft die Engstelle, durch die das Hydraulikmittel fließen muss, durch das Stellelement. Insbesondere kann die Engstelle durch eine axiale Bohrung des Stellelements gebildet werden, in die eine Stellschraube eingesetzt ist, mittels der der Querschnitt der Engstelle reguliert werden kann. Somit lässt sich auf einfache Weise eine von außen zugängliche Regulierung der Dämpfungskraft des Dämpfers und damit der Öffnungszeit einer mit dem Dämpfer ausgerüsteten Selbstschlussarmatur erreichen.

Außerdem kann in dem Kolben mindestens ein Einwegventil vorgesehen werden, durch welches Hydraulikflüssigkeit bei einer Bewegung des Kolbens in Öffnungsrichtung fließen kann. Alternativ kann auch mindestens ein Kolbenring vorgesehen werden, der schwimmend gelagert ist, so dass er bei einer Bewegung des Kolbens in Schließlichtung dichtend gegen eine Dichtfläche am Kolbenrand anliegt und bei einer Bewegung des Kolbens in Öffnungsrichtung von Hydraulikflüssigkeit umströmt werden kann. Damit wird erreicht, dass bei einer Bewegung des Kolbens in einer Betätigungsrichtung zum Öffnen einer damit ausgestatteten Sanitärarmatur die Betätigung nicht gegen den Widerstand des Dämpfers erfolgen muss.

Vorzugsweise kann das Stellelement als Kolbenstange ausgebildet sein, die mit dem Kolben axial starr verbunden ist. Hierdurch wird ein besonders einfacher Aufbau erreicht. Zusätzlich ist es möglich, die Kolbenstange drehfrei mit dem Kolben zu verbinden, so dass Drehbewegungen der Kolbenstange auf eine weitere Baugruppe wie z.B. eine Mischerbaugruppe übertragen werden können, um so z.B. gleichzeitig die Temperatur des Wasserflusses einstellen zu können. Hierzu kann beispielsweise das Mitnehmerorgan als profilierter Zapfen ausgebildet werden, welcher eine drehinvariante Steckverbindung mit der weiteren Baugruppe, z.B der Mischerbaugruppe, ermöglicht.

Bei einer weiteren bevorzugten Ausführungsform der Erfindung ist außerdem vorgesehen, das Ventilelement als keramisches Dreischeiben-Ventil auszuführen, bei dem eine bewegliche Ventilscheibe zwischen je einer zulaufseitigen und einer auslaufseitigen statischen Ventilscheibe angeordnet ist. Die beiden statischen Ventilscheiben weisen einen oder mehrere zueinander korrespondierende Durchlassöffnungen auf. Zwischen den beiden statischen Ventilscheiben ist die bewegliche Ventilscheibe aus einer Schließstellung, in der sie einen Wasserfluss zwischen den jeweils korrespondierenden Durchlassöffnungen versperrt, in eine Öffnungsstellung, in der sie einen Wasserfluss freigibt, bewegbar und umgekehrt.

Aufgrund der glatten Oberflächen keramischer Bauteile sind die zwischen diesen wirkenden Reibungskräfte reduziert. Außerdem können die zwischen den einzelnen Ventilscheiben wirkenden Druckkräfte vermindert und besser verteilt werden. Die um das Ventil dicht zu halten erforderliche Anpresskraft bzw. Vorspannung der Ventilscheiben kann somit vermindert werden, so dass im Ergebnis die zwischen den Ventilscheiben wirkenden Reibungskräfte verringert werden.

Damit vor allem die auf die bewegliche Ventilscheibe wirkenden Kräfte zumindest teilweise kompensiert werden, ist bei einer Weiterbildung vorgesehen, dass die bewegliche Ventilscheibe auf ihrer zur auslaufseitigen statischen Ventilscheibe weisenden Seite mindestens eine Druckausgleichsfläche besitzt, zu der in einem geschlossenen Ventilzustand über einen Entlastungskanal eine fluidleitende Verbindung zu mindestens einer Zulauföffnung in der zulaufseitigen Ventilscheibe besteht.

Durch geeignete Anordnung und Dimensionierung von einer oder mehrerer Druckausgleichsflächen, die über Entlastungskanäle im geschlossenen Zustand von Wasser hinterströmt werden können, werden zwischen den Ventilscheiben aufgrund des Wasserdrucks wirkende Kräfte reduziert. Die zwischen den Ventilscheiben wirkenden Andruckkräfte können dadurch weiter verringert und unabhängig von der Stellung des Ventils und vom Leitungsdruck vergleichsweise konstant gehalten werden. Dies führt zu einer geringeren Reibungskraft zwischen den Ventilscheiben und zu reduziertem Verschleiß.

Vorzugsweise weist die bewegliche Ventilscheibe mindestens eine Ventilöffnung auf, die in der Öffnungsstellung mit den Durchlassöffnungen der zulaufseitigen und der auslaufseitigen Ventilscheibe korrespondiert und mit diesen zumindest teilweise in Deckung gebracht ist, um den Wasserfluss freizugeben. In diesem Fall kann die fluidleitende Verbindung im geschlossenen Ventilzustand durch die Ventilöffnung verlaufen, so dass in der Ventilöffnung der Wasserdruck am Zulauf anliegt.

Die Druckausgleichsfläche wird vorzugsweise durch eine Ausnehmung auf der einem Auslauf der Sanitärarmatur zugewandten Seite der beweglichen Ventilscheibe gebildet. Dies ist vorteilhaft, da die bewegliche Ventilscheibe in der Praxis ohnehin im Vergleich zu den statischen Ventilscheiben stärker ausgelegt werden sollte als die statischen Ventilscheiben, um genügend Angriffsfläche für einen Betätigungsmechanismus zu bieten.

Alternativ kann aber auch die auslaufseitige Ventilscheibe eine entsprechende Ausnehmung aufweisen, wobei als flüssigkeitshinterströmte Druckausgleichsfläche die zu der Ausnehmung weisende Fläche der beweglichen Ventilscheibe wirkt.

Eine weitere Verbesserung kann durch Verwendung von Lippen- oder Lamellendichtungen zwischen den statischen Ventilscheiben und zulauf- bzw. auslaufseitiger Gehäuseteilen der Ventilkartusche erreicht werden, die seitliche Flanken aufweisen ,die durch Druckbeaufschlagung gegen die statischen Ventilscheiben gepresst werden. Einerseits verstärkt sich bei solchen Lippen- bzw. Lamellendichtungen die Dichtwirkung unter Druck, anderseits reduziert sich die Andrucckraft der Lippen- bzw. Lamellendichtungen und damit die zwischen den Ventilscheiben wirkende Andruck- und Reibungskraft, wenn kein Wasserdruck anliegt.

Weitere vorteilhafte Weiterbildungen und Vorteile der Erfindung werden anhand der Ausführungsbeispiele und der beigefügten Zeichnungen beschrieben. Hierbei zeigt:
- Fig. 1: eine isometrische Ansicht einer modularen Ventilkartusche,
- Fig. 2: einen axialen Schnitt durch die Ventilkartusche aus Fig. 1,
- Fig. 3: einen axialen Schnitt durch die Ventilkartusche aus Fig. 1 in einer zu Fig. 2 senkrechten Schnittebene,
- Fig. 4: eine isometrische Ansicht einer in der Ventilkartusche aus Fig. 1 ein-gesetzten Ventileinheit mit keramischen Dichtscheiben,
- Fig. 5: einen vertikalen Schnitt durch die Ventileinheit aus Fig. 4
- Fig. 6: eine isometrische Ansicht eines Schließantriebs für die modulare Ventilkartusche aus Fig. 1,
- Fig. 7: einen Längsschnitt durch den Schließantrieb aus Fig. 6,
- Fig. 8: eine isometrische Ansicht eines Stellelements für die Ventilkartusche aus Fig. 1,
- Fig. 9: einen Längsschnitt durch das Stellelement aus Fig. 8,
- Fig. 10: eine isometrische Ansicht der Ventilkartusche aus Fig. 1 mit angebau-tem Schließantrieb,
- Fig. 11: eine Explosionszeichnung der Ventilkartusche aus Figur 1 mit Schließantrieb sowie einer wahlweise verwendbaren Mischerbaugruppe und eines Leerelements,
- Fig. 12: die Mischerbaugruppe aus Fig. 11 in einer Explosionszeichnung, und
- Fig. 13: einen Längsschnitt durch eine Selbstschlussarmatur mit einer modularen Ventilkartusche.

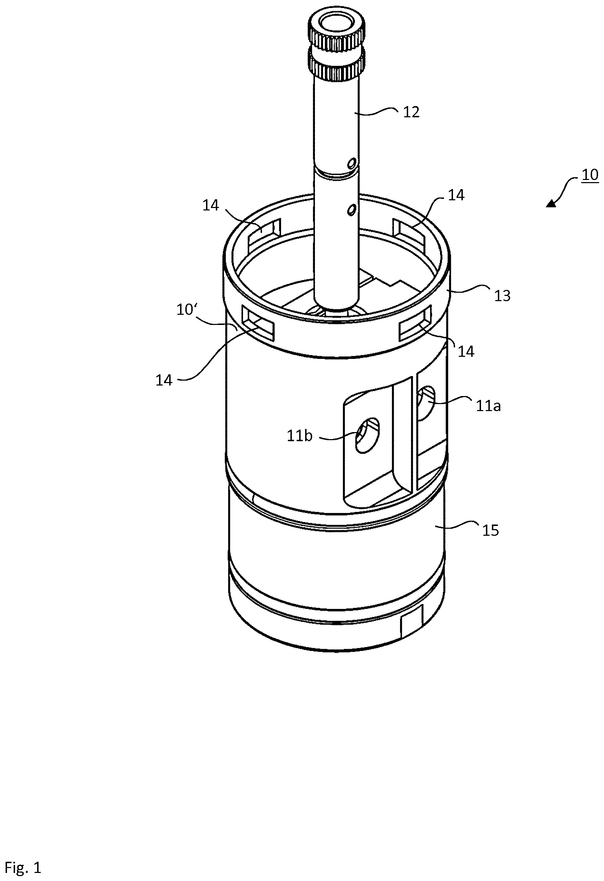

Ein Ausführungsbeispiel einer modularen Ventilkartusche wird nachfolgend anhand der Figuren 1 bis 3 beschrieben. Hierbei zeigt Fig. 1 eine isometrische Ansicht der Ventilkartusche 10. Diese weist ein in etwa zylindrisches Kartuschengehäuse 10'auf, welches seitlich zwei Auslauföffnungen 11a, 11b besitzt, durch die in geöffnetem Ventilzustand Wasser zu einem armaturenseitigem Auslauf gelangt.

Im oberen Bereich des zylindrischen Kartuschengehäuses 10'befindet sich ein Montagekranz 13 mit Ausnehmungen 14, der zum Anbau einer bedienseitigen Baugruppe, wie etwa eines Schließantriebs für eine Selbstschlussarmatur oder eines Stellantriebs für eine elektrisch betätigte Armatur dient. Die ventilseitige Baugruppe kann über entsprechende Rastnasen in den Ausnehmungen 14 des Anschlusskranzes 13 verrastet werden.

In der nach unten weisenden Verlängerung des Kartuschengehäuses 10' ist ein Bauraum 15 zur Aufnahme einer zulaufseitigen Baugruppe, wie etwa eines Mischers für Warm- und Kaltwasser oder eines Thermostatmischers vorgesehen. Axial durch die Ventilkartusche 10 verläuft ein stabförmiges Stellelement 12, welches im oberen Bereich der Ventilkartusche 10 mit einer bedienseitigen Baugruppe und im unteren Bereich 15 der Ventilkartusche 10 mit einer zulaufseitigen Baugruppe verbunden werden kann und mit diesen zusammenwirkt.

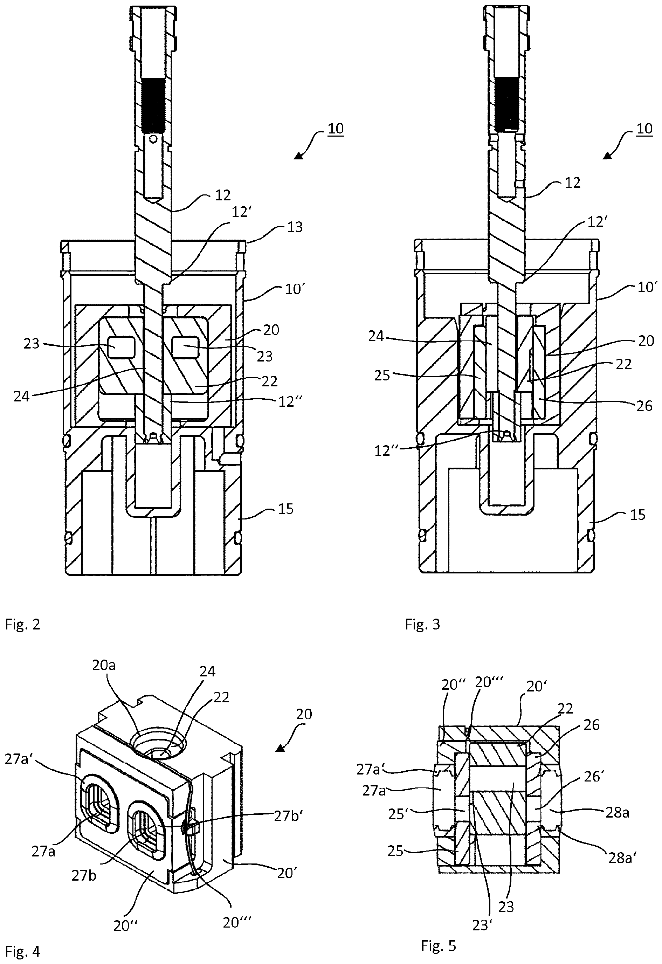

Fig. 2 zeigt die Ventilkartusche 10 in einem axialen Schnitt. Ein Herzstück der Ventilkartusche 10 bildet eine Ventileinheit 20 mit einem innerhalb der Ventileinheit 20 beweglich angeordneten keramischen Ventilelement 22, welches je nach Stellung einen Wasserfluss wahlweise freigibt oder versperrt. Hierzu weist das keramische Ventilelement 22 zwei Durchlassöffnungen 23 auf, die zu beiden Seiten einer axial verlaufenden mittigen Ausnehmung 24 angeordnet sind. Durch die Ausnehmung 24 in dem beweglichen Ventilelement 22 verläuft das stabförmige Stellelement 12, welches in diesem Bereich einen reduzierten Durchmesser aufweist. Wird das Stellelement in axialer Richtung nach unten bewegt, so gleitet es zunächst durch die Ausnehmung 24 des beweglichen Ventilelements 22 hindurch, bis die Schulter 12' an das bewegliche Ventilelement 22 anstößt. Nach diesem Leerhub schiebt das Stellelement 12 das bewegliche Ventilelement 22 von der oberen Schließstellung bis in eine untere Öffnungsstellung.

An seinem unteren Ende weist das Stellelement 12 einen profilierten Zapfen 12" auf, der einerseits bei axialer Bewegung als Mitnehmer für die bewegliche Ventilscheibe 22 und anderseits bei einer Drehbewegung als Passverzahnung für eine unterhalb der Ventileinheit 20 angeordnete weitere Baugruppe, wie etwa einen mechanischen Mischer oder einen Thermostatmischer dient. Im gezeigten Ausführungsbeispiel ist in dem Mischerbauraum 15 lediglich ein Leerelement eingesetzt, so dass der Bauraum 15 im Wesentlichen frei bleibt.

Fig. 3 zeigt die Ventilkartusche 10 in einem axialen Schnitt senkrecht zur Schnittebene in Fig. 2. In dieser Ansicht ist der Aufbau der Ventileinheit 20 näher zu erkennen. Bei der Ventileinheit 20 handelt es sich um ein Dreischeiben-ventil mit keramischen Ventilscheiben. Dieses ist innerhalb eines Gehäuses der Ventileinheit 20 angeordnet und umfasst neben der beweglichen Ventilscheibe 22 eine zulaufseitige statische Ventilscheibe 25 und eine auslaufseitige statische Ventilscheibe 26. Die bewegliche Ventilscheibe 22 weist die zur linken Seite hin offene U-förmige Ausnehmung 24 auf, durch die das stabförmige Stellelement 12 geführt ist. Bei einer Aufwärtsbewegung des Stellelements 12 greift der Mitnehmer am unteren Ende 12" an die bewegliche Ventilscheibe 22 und bewegt diese in die obere, in Fig. 3 gezeigte Schließstellung. Bei einer Abwärtsbewegung des Stellelements 12 gleitet zunächst der mittlere reduzierte Bereich des Stellelements 12 durch die Ausnehmung 24 der beweglichen Ventilscheibe 22, bis die Schulter 12' mit der beweglichen Ventilscheibe 22 Kontakt hat und diese dann weiter in die untere Öffnungsstellung des Ventils bewegt.

In Fig. 4 ist die Ventileinheit 20, welche hier auch als Ventilpatrone bezeichnet wird, einzeln gezeigt. Sie umfasst ein Gehäuse 20', welches mit einem Gehäusedeckel 20" verschlossen ist. Eine Biegefeder 20'" hält Gehäuse 20' und Gehäusedeckel 20" zusammen und erzeugt eine Andruckkraft für die innerhalb des Gehäuses 20' befindlichen Ventilscheiben 25, 22 und 26. Der Gehäusedeckel 20" weist zwei Durchlassöffnungen 27a, 27b auf, die mit zugehörigen Dichtungen 27a', 27b' versehen sind. Korrespondierende Durchlassöffnungen 28a, 28b mit entsprechenden Dichtungen 28a', 28b' befinden sich auf der Rückseite des Gehäuses 20'. Durch eine Öffnung 20a im oberen Bereich der Ventilpatrone 20 erstreckt sich im zusammengebauten Zustand das stabförmige Stellelement 12. In Fig. 4 blickt man durch die Öffnung 20a auf das in der oberen Schließstellung befindliche bewegliche Ventilelement 22 mit seiner nach vorne hin offenen U-förmigen Ausnehmung 24.

In Fig. 5 ist ein Schnitt durch die Ventilpatrone 20 gezeigt, wobei die Schnittführung vertikal, zu dessen Mittenachse bzw. Ausnehmung 24 versetzt durch die Durchlassöffnung 27a gelegt ist. In Fig. 5 sind die Ventilscheiben 25, 22 und 26 in Schließstellung gezeigt. Der Durchlass 26' in der auslaufseitigen statischen Ventilscheibe 26 ist hierbei von der beweglichen Ventilscheibe 22 versperrt. Wird die bewegliche Ventilscheibe 22 nach unten in die Öffnungsstellung bewegt, so gibt die Durchlassöffnung 23 in der beweglichen Ventilscheibe 22 die Durchlassöffnung 25' und 26' in den beiden statischen Ventilscheiben 25, 26 frei, so dass Wasser zum Auslauf der zugehörigen Sanitärarmatur strömen kann.

Die Dichtungen 27a', 28a' in den gehäuseseitigen Durchlässen 27a, 28a sind als Lippen- bzw. Lamellendichtungen aus einem weichelastischen Material wie etwa Gummi oder Silikon ausgeführt, deren seitliche Flanken durch Druckbeaufschlagung gegen die Ventilscheiben 25 bzw. 26 sowie die zulaufseitigen und auslaufseitigen Gehäuseteile der Ventilkartusche 10 gepresst werden, so dass die Dichtwirkung verstärkt wird. Liegt hingegen kein Wasserdruck an, so ist die Andruckkraft der Lippen- bzw. Lamellendichtungen 27a', 28a' und damit die zwischen den Ventilscheiben 25, 22 und 26 wirkende Andruck- und Reibungskraft reduziert. Außerdem befindet sich in der beweglichen Ventilscheibe 22 ein kleiner Entlastungskanal 23', der in der Schließstellung innerhalb der Durchlassöffnung 25' der zulaufseitigen statischen Ventilscheibe 25 mündet, so dass eine fluidleitende Verbindung zwischen der Zulaufseite und der Durchlassbohrung 23 in der beweglichen Ventilscheibe 22 besteht.

Seitlich versetzt zu der Schnittebene und zu der Durchlassöffnung 26' der auslaufseitigen statischen Ventilscheibe 26 weist die bewegliche Ventilscheibe 22 eine über einen weiteren Entlastungskanal mit der Durchlassöffnung 23 verbundene Ausnehmung auf, die im geschlossenen Ventilzustand von Wasser hinterströmt werden kann und als Druckausgleichsfläche innerhalb des Dreischeibenventils dient. In Fig. 3 ist diese Ausnehmung 23" zu erkennen. Das Vorsehen der Entlastungskanäle 23' und Druckausgleichsflächen 23" sowie die Verwendung der Lippen- bzw. Lamellendichtungen führt zu einer deutlichen Verringerung der Reibungskräfte zwischen den Ventilscheiben 25, 22, 26, so dass die Ventilanordnung mit vergleichsweise geringen Betätigungskräften geöffnet bzw. geschlossen werden kann.

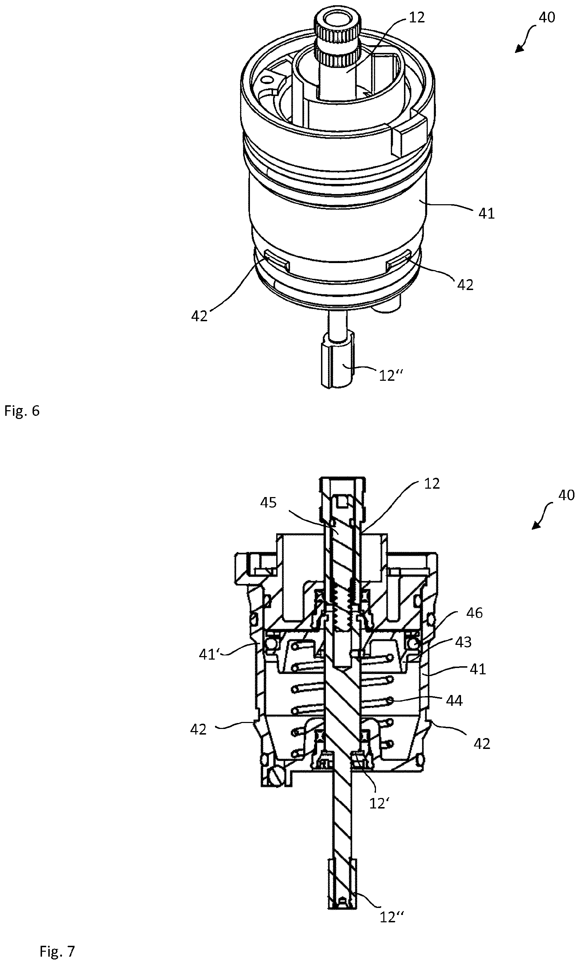

In Fig. 6 ist ein hydraulisch gedämpfter Schließantrieb 40 für die modulare Ventilkartusche 10 aus Fig. 1 gezeigt. Er besitzt ein Dämpfergehäuse 41 in welches mittig das stabförmige Stellelement 12 eingesetzt ist, dessen unteres Ende im zusammengebauten Zustand in der Ventilkartusche 10 verbaut ist. Rastnasen 42 im unteren Bereich des Schließantriebs 40 verrasten beim Zusammenbau des Schließantriebs 40 mit der Ventilkartusche 10 in den Ausnehmungen 14 am Montagekranz 13 des Kartuschengehäuses 10'.

In Fig. 7 ist der Schließantrieb 40 mit eingesetztem Stellelement 12 in einem Axialschnitt gezeigt. Das Dämpfergehäuse 41 des Schließantriebs 40 dient hierbei als Hydraulikzylinder für einen darin in axialer Richtung beweglichen Kolben 43, der mit dem stabförmigen Stellelement 12 beispielsweise mittels eines Sicherungsrings verbunden und gegenüber diesem drehbar gelagert ist. Das Stellelement stellt damit eine Kolbenstange eines hydraulischen Dämpfers dar.

Im unteren Teil des Dämpfergehäuses 41 ist unterhalb des Kolbens 43 eine Schraubendruckfeder 44 angeordnet, die auf den Kolben 43 eine nach oben gerichtete Rückstellkraft ausübt. Anstelle einer Schraubendruckfeder können natürlich auch andere Arten von Kraftspeichern als Rückstellelement eingesetzt werden, wie beispielsweise Gasdruckfedern, Tellerfedern, Ringfedern, Elastomerfedern o.ä..

Wird die Kolbenstange 12 und damit der Kolben 43 nach unten gedrückt, so verdrängt der Kolben 43 im Dämpfergehäuse befindliche Hydraulikflüssigkeit, die durch entsprechende Einwegventile im Kolbenboden oder an einem schwimmend gelagerten Kolbenring vorbei in den Bereich oberhalb des Kolbens 42 fließen kann. Über die Schulter 12' bewegt das Stellelement 12 beim Herunterdrücken die bewegliche Ventilscheibe 22 der Ventileinheit 20 in die Öffnungsstellung und gibt so einen Wasserfluss frei. Die Rückstellfeder 44 sorgt anschließend dafür, dass der Kolben 43 zurück in seine obere Endlage innerhalb des Dämpfergehäuses 41 bewegt wird. Hierbei muss die oberhalb des Kolbens 43 stehende Hydraulikflüssigkeit verdrängt werden und durch eine Engstelle zurück in den unteren Bereich des Dämpfergehäuses 41 fließen. Die Engstelle wird im Ausführungsbeispiel durch eine axiale Bohrung im Inneren des Stellelements 12 gebildet. Die axiale Bohrung ist mit einem Gewinde versehen, in welches eine Stellschraube 45 eingesetzt ist, mittels der der Querschnitt der Engstelle und damit die Öffnungszeit des Ventils variiert werden kann. Im oberen Bereich 41' des Dämpfergehäuses 41 ist der Durchmesser des Dämpfers geringfügig erweitert, so dass in diesen Bereich der Kolben 43 mit wesentlich niedrigerem Widerstand nach oben bewegt werden kann, da die Hydraulikflüssigkeit um die Kolbendichtung 46 herumfließen kann.

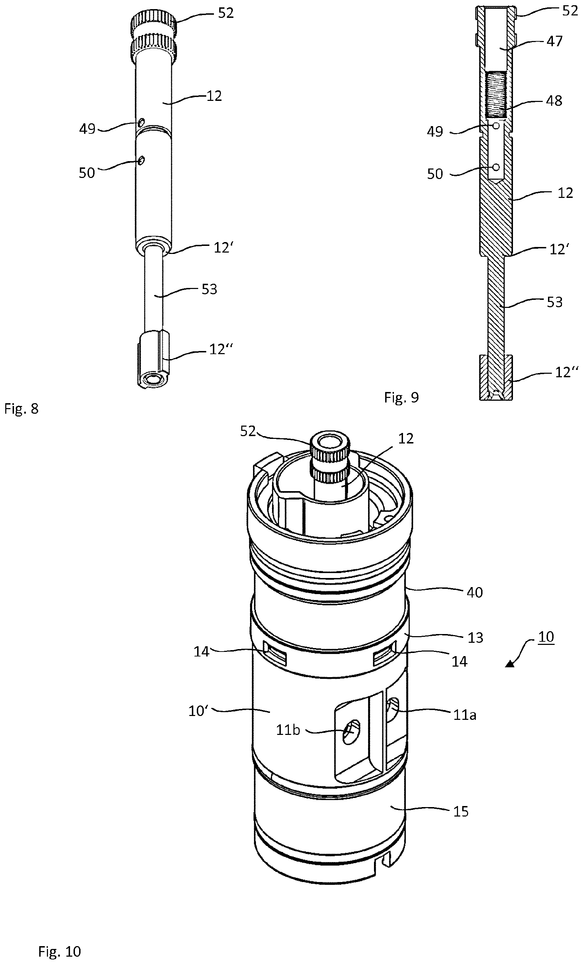

In den Fig. 8 und 9 ist das stabförmige Stellelement 12 vergrößert gezeigt. Innerhalb des Stellelements 12 ist eine axiale Bohrung 47 angebracht, welche im unteren Bereich leicht konisch verläuft. Im mittleren Bereich der Axialbohrung 47 ist außerdem ein Gewinde 48 eingeschnitten, in welches die Stellschraube 45 einschraubt werden kann. Über zwei radial verlaufende Bohrungen 49, 50 kann Hydraulikflüssigkeit durch die axiale Bohrung 47 vom oberen zurück in den unteren Bereich des Dämpfergehäuses 41 fließen. Mittels der Stellschraube 45 lässt sich die so gebildete Engstelle im Querschnitt variieren. Eine in Umfangsrichtung verlaufende Nut 41 unterhalb der oberen Einlassbohrung 49 dient zur Befestigung des Stellelements 12 am Kolben 43, beispielsweise mittels eines Sicherungsrings.

Der Kopfbereich 52 des Stellelements weist eine Verzahnung auf, auf die beispielsweise ein Bedienknopf einer Sanitärarmatur aufgesteckt werden kann. Der untere Bereich 53 mit verringertem Durchmesser verläuft im zusammengebauten Zustand durch das bewegliche Ventilelement 22. Der mit Mitnehmern versehene Endbereich bzw. Zapfen 12" dient gleichzeitig als unterer Anschlag für das bewegliche Ventilelement 22 und als drehinvariante Steckverbindung für eine im unteren Bereich 15 der Ventilkartusche 10 einsetzbare Mischerbaugruppe.

In Fig. 10 ist die zusammengebaute Ventilkartusche 10 mit dem Kartuschengehäuse 10' der Grundeinheit, dem Schließantrieb 40 und dem eingesetzten Stellelement 12 dargestellt. Kartuschengehäuse 10' und Schließantrieb 40 sind an dem Montagekranz 13 zusammengesteckt und in den Ausnehmung 14 miteinander verrastet. Das Stellelement 12 durchquert beide Baugruppen.

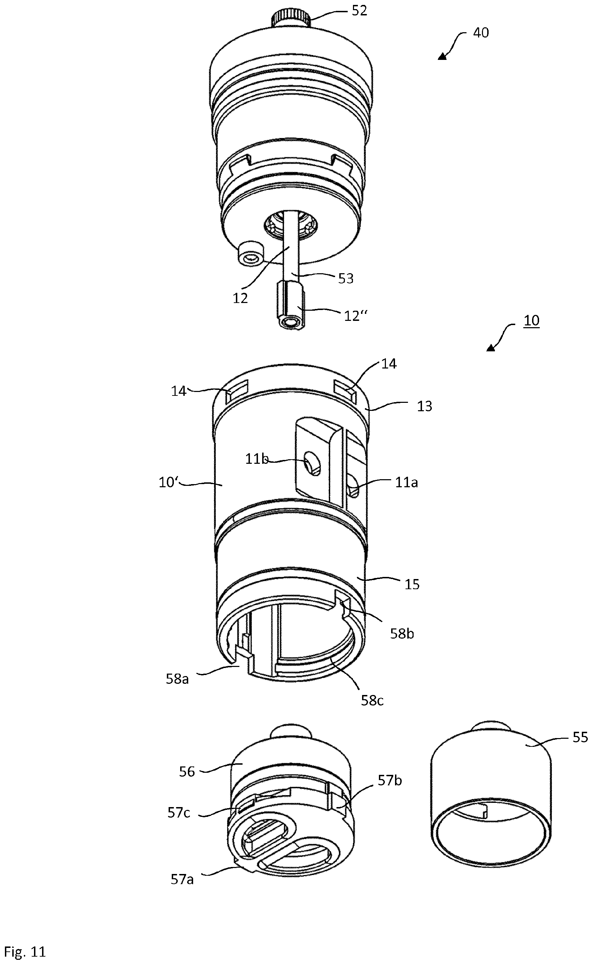

In den unteren Bauraum 15 des Kartuschengehäuses 10' können alternativ entweder eine Mischerbaugruppe 56 oder ein Leerelement 55 eingesetzt werden. Dies ist in Figur 11 in einer Explosionszeichnung gezeigt. Die Mischerbaugruppe 56 stellt einen mechanischen Mischer mit keramischen Mischerscheiben für Warm- und Kaltwasser dar. Wird anstelle der Mischerbaugruppe 56 das Leerelement verwendet, so dient die Ventilkartusche 10 lediglich als Schließventil für Kaltwasser bzw. vorgemischtes oder temperiertes Mischwasser.

An dem unteren Bauraum 15 des Kartuschengehäuses 10' und an der Mischerbaugruppe 56 sind korrespondierende mechanische Verbindungsmittel vorgesehen, und zwar Gehäusenasen 57a, 57b sowie Rastelemente 57c an der Mischerbaugruppe 56 und korrespondierende Ausnehmungen 58a, 58b sowie ein Haltering 58c mit Hinterschnitt, an dem die Rastelemente 57c einrasten, am Kartuschengehäuse 10'..

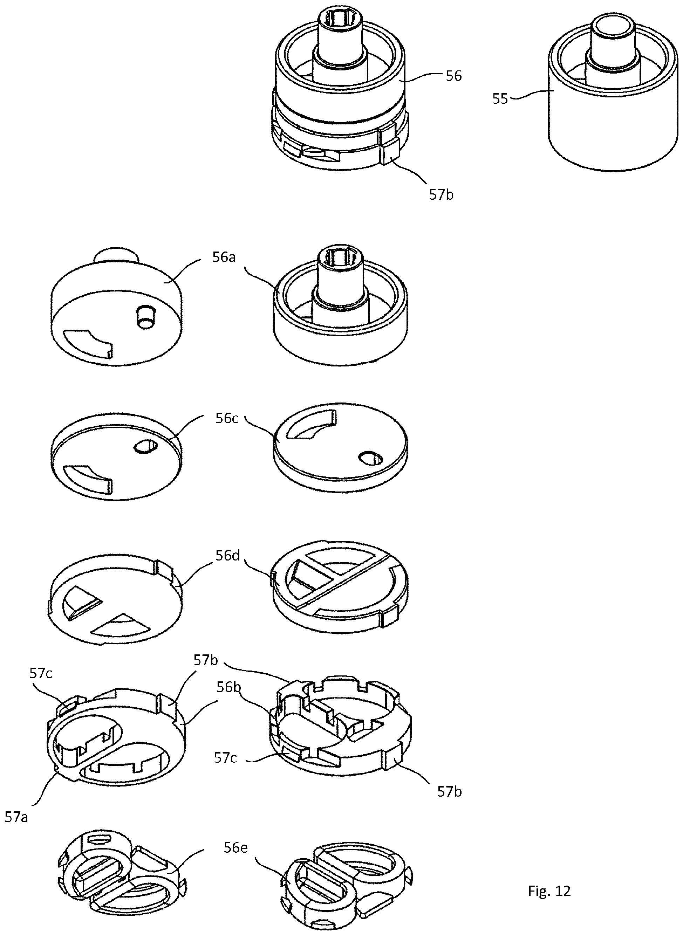

Die Mischerbaugruppe 56 ist in Figur 12 in einer Explosionszeichnung gezeigt. Sie umfasst ein Mischeroberteil 56a, welches drehfest aber axial verschieblich mit dem Stellelement 12 verbunden ist, ein Mischerunterteil 56b, welches statisch mit dem Kartuschengehäuse 10'verbunden ist, sowie zugehörige Dichtungen 58. Zwischen Mischeroberteil 56a und dem als dichtender Gehäuseabschluß dienenden Mischerunterteil 56b sind zwei keramische Mischerscheiben 56c und 56d eingesetzt.

Das Mischeroberteil 56a dient hierbei als Mitnehmer für die drehbare Mischerscheibe 56c und wird drehfest aber axial verschieblich mit dem Zapfen 12" des Stellelements 12 zusammengesteckt. Die statische Mischerscheibe 56d wird zusammen mit dem Mischerunterteil 56b starr in das Kartuschengehäuse 10' eingesetzt. Die keramischen Mischerscheiben 56c, 56d dienen in an sich bekannter Weise dazu, über separate Zuleitungen zugeführtes Warm- und Kaltwasser in einstellbarem Mischungsverhältnis miteinander zu Mischwasser zu verschneiden. Das so gemischte Mischwasser gelangt dann bei geöffneter Ventileinheit 20 zum Auslauf der zugehörigen Sanitärarmatur.

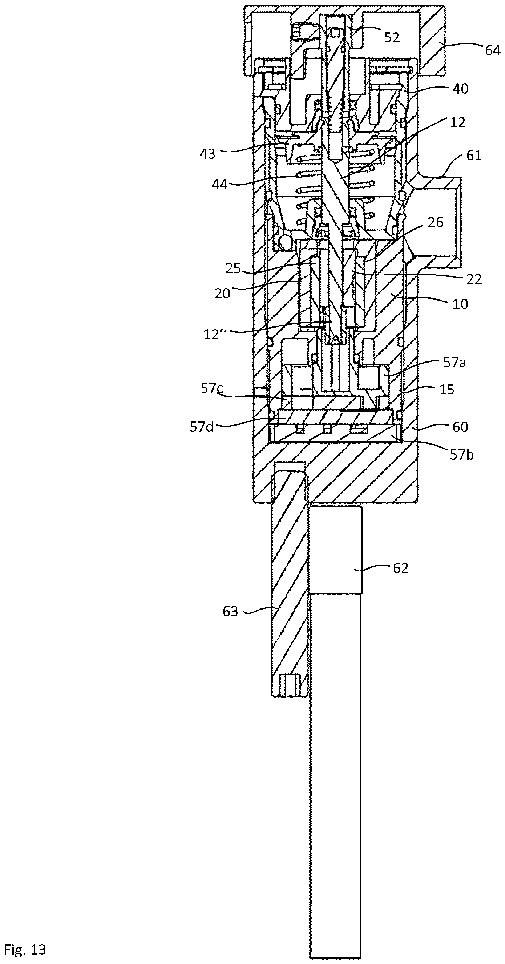

In Fig. 13 ist eine Schnittzeichnung durch eine komplette Sanitärarmatur mit darin eingesetzter Ventilkartusche 10 gezeigt. Die Sanitärarmatur besitzt ein Armaturengehäuse 60 mit einem Wasserauslauf 61, zwei Zuleitungen für Warm- und Kaltwasser, von denen in der Schnittzeichnung lediglich die hintere Zuleitung 62 dargestellt ist, eine Befestigungsschraube 63, die zur Befestigung der Sanitärarmatur an einem Waschtisch dient, sowie einen Bedienknopf 64.

In das Armaturengehäuse 60 ist die Ventilkartusche 10 mit dem hydraulischen Schließantrieb 40 und der keramischen Mischerbaugruppe 56 eingesetzt. Auf den gezahnten Kopf 52 des Stellelements 12 ist der Bedienknopf 64 der Sanitärarmatur aufgesteckt. Durch Herunterdrücken des Bedienknopfes 64 wird die Ventileinheit 20 geöffnet, indem das Stellelement 12 die bewegliche Ventilscheibe 22 in die Öffnungsstellung verschiebt.

Das untere profilierte Ende 12" des Stellelements 12 ist drehfest mit dem Mischeroberteil 56a verbunden, der als Mitnehmer für die bewegliche Mischerscheibe 56c dient. Durch Drehen des Bedienknopfs 64 wird über das Stellelement 12 und das damit drehfest verbundene Mischeroberteil 56a die bewegliche Mischerscheibe 56c verstellt, wodurch das Mischungsverhältnis zwischen Warm- und Kaltwasser variiert werden kann.

Nach dem Öffnen der Ventileinheit 20 sorgt die Rückstellfeder 44 des hydraulisch gedämpften Schließantriebs 40 dafür, dass der Kolben 43 und mit ihm das Stellelement 12 wieder zurück in die obere Endlage geführt werden. Hierbei führt das Stellelement 12 zunächst einen Leerhub aus, bis die Mitnehmer am unteren Ende 12" an der beweglichen Ventilscheibe 22 anliegen und diese nach oben in die Schließstellung mitnehmen. Die Zeit, die der Kolben 43 von seiner unteren Auslenkung bis zu dem Punkt braucht, an dem die Mitnehmer 12" an der beweglichen Ventilscheibe 22 angekommen sind, bestimmt die Öffnungszeit der Armatur. Ab diesem Punkt ist der Querschnitt des Dämpfergehäuses erweitert, so dass der anschließende Schließvorgang des Ventils 20 beschleunigt erfolgt. Hierdurch wird erreicht, dass der Wasserfluss schnell abgestellt wird und nicht wie bei herkömmlichen Selbstschlussarmaturen mit Gegendruckkammer langsam "auströpfelt".

Die im Ausführungsbeispiel gezeigte Sanitärarmatur dient somit als Selbstschussarmatur mit einstellbarer Mischwassertemperatur. Wie bereits erwähnt, kann die erfindungsgemäße Ventilkartusche aber auch für eine Vielzahl anderer Einsatzbereiche ausgerüstet werden. Beispielsweise kann der Schließantrieb 40 und der Bedienknopf 64 durch einen elektrisch gesteuerten Stellantrieb mit entsprechenden Sensoren für eine berührungslose Betätigung der Armatur ausgerüstet werden. Anstelle des Mischers 56 kann beispielsweise auch ein Thermostatmischer eingesetzt werden.

## Patentansprüche

1. Modulare Ventilkartusche (10) für eine Sanitärarmatur mit einer zentralen Ventileinheit (20), die ein bewegliches, einen Wasserfluss wahlweise versperrendes oder freigebendes Ventilelement (22) und ein länglich geformtes Stellelement (12) aufweist, welches an das Ventilelement (22) angreift, um dieses von einer Schließstellung in eine Öffnungsstellung oder umgekehrt zu bewegen, **dadurch gekennzeichnet,**
**dass** das bewegliche Ventilelement (22) aus einem Keramikmaterial ausgebildet ist und dass das Stellelement (12) die Ventileinheit (20) in einer axialen Richtung durchquert und an beiden seiner Enden (52, 12") mit weiteren Baugruppen (40, 55, 56) zusammenwirkbar ausgebildet ist, wobei das Stellelement (12) in Rotationsrichtung drehfrei gegenüber dem beweglichen Ventilelement (22) gelagert und derart mit dem Ventilelement (22) zusammenwirkend ausgebildet ist, dass es eine Linearbewegung auf das bewegliche Ventilelement (22) überträgt, während eine Rotationsbewegung auf eine der weiteren Baugruppen (40, 55, 56) übertragbar ist.

2. Ventilkartusche nach Anspruch 1, welche ein Gehäuse umfasst, das an seinem oberen und/oder unteren Ende mechanische Verbindungsmittel (14, 58a, 58b, 58c) zum Anschluss von der bzw. den weiteren Baugruppen (40, 55, 56) aufweist.

3. Ventilkartusche nach Anspruch 1 oder 2, bei der am einen Ende des Stellelements (12) eine Betätigungseinheit (40) mit dem Stellelement (12) zusammenwirkend verbunden ist.

4. Ventilkartusche nach Anspruch 3, bei der die Betätigungseinheit (40) einen Schließantrieb für eine Selbstschlussarmatur umfasst.

5. Ventilkartusche nach Anspruch 3, bei der die Betätigungseinheit einen Stellantrieb für eine elektrisch betätigte Armatur umfasst.

6. Ventilkartusche nach einem der vorangehenden Ansprüche, bei der am anderen Ende des Stellelements (12") eine mechanische Mischerbaugruppe (56) oder eine Thermostatmischerbaugruppe mit dem Stellelement (12) zusammenwirkend verbunden ist.

7. Ventilkartusche nach Anspruch 6, umfassend eine Mischerbaugruppe (56) mit einem drehbaren Mischerbauteil (56c), wobei das bewegliche Ventilelement (22) und das drehbare Mischerbauteil (56c) über das Stellelement (12) verstellbar sind, indem dieses Linearbewegungen auf das bewegliche Ventilelement (22) und eine Rotationsbewegung auf das drehbare Mischerbauteil (56c) überträgt.

8. Ventilkartusche nach Anspruch 4, bei der Schließantrieb (40) einen Dämpfer (41, 43) mit einem mit dem Stellelement (12) verbundenen, beweglichen Dämpferorgan (43), das von einer Ausgangslage in eine Endlage auslenkbar ist, und einem Kraftspeicher (44) umfasst, der ausgebildet ist, eine Rückstellkraft auf das Dämpferorgan (43) in Richtung seiner Ausgangslage auszuüben; wobei der Schließantrieb (40) derart ausgebildet ist, dass das in die Endlage ausgelenkte Dämpferorgan (43) durch die von dem Kraftspeicher (44) ausgeübte Rückstellkraft gegen den Widerstand des Dämpfers (41, 43) selbsttätig zurück in eine Ausgangslage bewegt wird, wobei das Stellelement (12) bei seiner Rückbewegung zunächst einen Leerhub ausführt, bevor ein am Stellelement (12) vorgesehenes Mitnehmerorgan (12") eine Schließbewegung des Ventilelements (22) bewirkt.

9. Ventilkartusche nach Anspruch 8, bei dem der Dämpfer (41, 43) so ausgebildet ist, dass seine Dämpfungskraft im Anschluss an den Leerhub zumindest vermindert ist.

10. Ventilkartusche nach Anspruch 8 oder 9, bei dem der Dämpfer (41, 43) einen Hydraulikkolben (43) umfasst, der in einem mit einem Hydraulikmittel gefüllten Hydraulikzylinder (41) läuft und bei einer Rückbewegung zurück in die Ausgangslage Hydraulikmittel verdrängt, welches hierbei durch eine Engstelle (47, 49, 50) hindurchfließen muss

11. Ventilkartusche nach Anspruch 9 und 10, bei dem der Hydraulikzylinder (41) in einem Bereich (41') vor der Ausgangslage einen erweiterten Durchmesser aufweist, so dass seine Dämpfungskraft in diesem Bereich vermindert ist.

12. Ventilkartusche nach Anspruch 11, bei dem die Engstelle (47, 49, 50) durch das Stellelement (12) verläuft, vorzugsweise durch eine axiale Bohrung (47) des Stellelements gebildet wird, in die eine Stellschraube (45) eingesetzt ist, mittels der der Querschnitt der Engstelle (47, 49, 50) reguliert werden kann.

13. Ventilkartusche nach dem einem der Ansprüche 10 bis 12, bei in dem Kolben (43) mindestens ein Einwegventil vorgesehen ist, durch welches Hydraulikflüssigkeit bei einer Bewegung des Kolbens in Öffnungsrichtung fließen kann oder bei dem mindestens ein Kolbenring (46) schwimmend gelagert ist, derart, dass er bei einer Bewegung des Kolbens (43) in Schließlichtung dichtend gegen eine Dichtfläche am Kolbenrand anliegt und bei einer Bewegung des Kolbens (43) in Öffnungsrichtung von Hydraulikflüssigkeit umströmt werden kann .

14. Ventilkartusche nach einem der Ansprüche 10 bis 13, bei dem das Stellelement (12) als Kolbenstange ausgebildet, die mit dem Kolben (43) drehfrei jedoch axial starr verbunden ist.

15. Ventilkartusche nach Anspruch 8 oder nach einem der von Anspruch 8 abhängigen Ansprüche 9 bis 14, bei dem das Mitnehmerorgan (12") als profilierter Zapfen ausgebildet ist, welcher eine drehinvariante Steckverbindung mit einer weiteren Baugruppe (56) ermöglicht.

16. Ventilkartusche nach einem der vorangehenden Ansprüche, wobei die Ventileinheit (20) als keramisches Dreischeiben-Ventil ausgebildet ist und das bewegliche Ventilelement (22) eine bewegliche Ventilscheibe ist, die zwischen je einer zulaufseitigen und einer auslaufseitigen statischen Ventilscheibe (25, 26) angeordnet ist, wobei die beiden statischen Ventilscheiben (25, 26) einen oder mehrere zueinander korrespondierende Durchlassöffnungen (25', 26') aufweisen und die bewegliche Ventilscheibe (22) zwischen einer Schließstellung, in der sie einen Wasserfluss zwischen den jeweils korrespondierenden Durchlassöffnungen versperrt, und einer Öffnungsstellung, in der sie einen Wasserfluss freigibt, bewegbar ist.

17. Ventilkartusche nach Anspruch 16, bei der die bewegliche Ventilscheibe (22) auf ihrer zur auslaufseitigen statischen Ventilscheibe (26) weisenden Seite mindestens eine Druckausgleichsfläche aufweist, zu der in einem geschlossenen Ventilzustand über mindestens einen Entlastungskanal (23') eine fluidleitende Verbindung zu mindestens einer der Durchlassöffnungen (25') in der zulaufseitigen Ventilscheibe (25) besteht.

## Claims

1. Modular valve cartridge (10) for a sanitary fitting, having a central valve unit (20), which has a movable valve element (22) that selectively blocks or allows a flow of water and an elongate actuator (12) which acts on the valve element (22) in order to move the latter from a closed position to an open position or *vice versa,* **characterised in that**
the movable valve element (22) is made from a ceramic material, and the actuator (12) passes through the valve unit (20) in an axial direction and is configured at both of its ends (52, 12") so as to be able to co-operate with further assemblies (40, 55, 56), the actuator (12) being mounted so as to be free to rotate in a rotation direction relative to the movable valve element (22) and being configured to co-operate with the valve element (22) in such a way that it transmits a linear movement to the movable valve element (22), while a rotational movement is transmissible to one of the further assemblies (40, 55, 56).

2. Valve cartridge according to claim 1, comprising a housing which has mechanical connecting means (14, 58a, 58b, 58c) at its upper and/or lower end(s) for connection of the further assembly or assemblies (40, 55, 56).

3. Valve cartridge according to claim 1 or 2, wherein at one end of the actuator (12) an operating unit (40) is co-operatively connected to the actuator (12).

4. Valve cartridge according to claim 3, wherein the operating unit (40) comprises a closing drive for a self-closing fitting.

5. Valve cartridge according to claim 3, wherein the operating unit comprises an actuating drive for an electrically operated fitting.

6. Valve cartridge according to any one of the preceding claims, wherein at the other end of the actuator (12") a mechanical mixer assembly (56) or a thermostatic mixer assembly is co-operatively connected to the actuator (12).

7. Valve cartridge according to claim 6, comprising a mixer assembly (56) having a rotatable mixer component (56c), wherein the movable valve element (22) and the rotatable mixer component (56c) are displaceable via the actuator (12), in that the latter transmits linear movements to the movable valve element (22) and a rotational movement to the rotatable mixer component (56c).

8. Valve cartridge according to claim 4, wherein the closing drive (40) comprises a damper (41, 43) having a movable damper member (43) connected to the actuator (12), which damper member is movable from a starting position to an end position, and an energy storage means (44) which is designed to exert a restoring force on the damper member (43) in the direction of its starting position; wherein the closing drive (40) is configured in such a way that the damper member (43), when moved into the end position, is moved automatically back into a starting position, against the resistance of the damper (41, 43), by the restoring force exerted by the energy storage means (44), wherein the actuator (12), during its return movement, first performs an idle stroke before a driver member (12") provided on the actuator (12) effects a closing movement of the valve element (22).

9. Valve cartridge according to claim 8,
wherein the damper (41, 43) is configured in such a way that, following the idle stroke, its damping force is at least reduced.

10. Valve cartridge according to claim 8 or 9, wherein the damper (41, 43) comprises a hydraulic piston (43) which runs in a hydraulic cylinder (41) filled with a hydraulic medium and, during a return movement back into the starting position, displaces hydraulic medium which, on being displaced, has to flow through a constriction (47, 49, 50).

11. Valve cartridge according to claim 9 and 10, wherein, in a region (41') before the starting position, the hydraulic cylinder (41) has a larger diameter so that its damping force is reduced in that region.

12. Valve cartridge according to claim 11, wherein the constriction (47, 49, 50) runs through the actuator (12), the constriction preferably being formed by an axial bore (47) of the actuator, in which bore there is inserted an adjusting screw (45) by means of which the cross-section of the constriction (47, 49, 50) can be regulated.

13. Valve cartridge according to one of claims 10 to 12, wherein there is provided in the piston (43) at least one one-way valve through which hydraulic fluid is able to flow on movement of the piston in the opening direction or wherein at least one piston ring (49) is floatingly mounted in such a way that, on movement of the piston (43) in the closing direction, it rests sealingly against a sealing surface on the piston rim and around which hydraulic fluid is able to flow on movement of the piston (43) in the opening direction.

14. Valve cartridge according to any one of claims 10 to 13, wherein the actuator (12) is in the form of a piston rod which is connected to the piston (43) so as to be free to rotate but axially rigid.

15. Valve cartridge according to claim 8 or according to any one of claims 9 to 14 dependent upon claim 8, wherein the driver member (12") is in the form of a profiled pin which allows a rotationally invariant plug-in connection to a further assembly (56).

16. Valve cartridge according to any one of the preceding claims, wherein the valve unit (20) is in the form of a ceramic three-disc valve and the movable valve element (22) is a movable valve disc which is arranged between an inlet-side and an outlet-side static valve disc (25, 26), wherein the two static valve discs (25, 26) have one or more mutually complementary through-openings (25', 26') and the movable valve disc (22) is movable between a closed position, in which it blocks a flow of water between the respectively complementary through-openings, and an open position, in which it allows water to flow.

17. Valve cartridge according to claim 16, wherein the movable valve disc (22) has on its side facing towards the outlet-side static valve disc (26) at least one pressure-equalisation surface, to which, in a closed state of the valve, a fluid-conducting connection to at least one of the through-openings (25') in the inlet-side valve disc (25) is made via at least one relief channel (23').

## Revendications

1. Cartouche modulaire de distribution (10) destinée à une robinetterie sanitaire, dotée d'une unité centrale de distribution (20) comprenant un élément distributeur mobile (22), bloquant ou autorisant sélectivement un écoulement d'eau, et un élément de manoeuvre (12) de forme oblongue, qui vient en prise avec ledit élément distributeur (22) en vue de mouvoir ce dernier d'une position de fermeture à une position d'ouverture, ou inversement,
**caractérisée par le fait**
**que** l'élément distributeur mobile (22) est constitué d'un matériau céramique ; et par le fait que l'élément de manoeuvre (12) traverse l'unité de distribution (20) dans une direction axiale et est réalisé, à ses deux extrémités (52, 12"), de manière à pouvoir coopérer avec des groupes structurels (40, 55, 56) supplémentaires, ledit élément de manoeuvre (12) étant monté pour pouvoir tourner librement par rapport à l'élément distributeur mobile (22), dans une direction de rotation, et étant réalisé de manière à coopérer avec ledit élément distributeur (22) de façon telle qu'il transmette un mouvement linéaire audit élément distributeur mobile (22), cependant qu'un mouvement rotatoire peut être transmis à l'un desdits groupes structurels (40, 55, 56) supplémentaires.

2. Cartouche de distribution selon la revendication 1, incluant un boîtier muni, à son (ses) extrémité(s) supérieure et/ou inférieure, de moyens mécaniques de liaison (14, 58a, 58b, 58c) affectés au raccordement respectif à partir du (des) groupe(s) structurel(s) (40, 55, 56) supplémentaire(s).

3. Cartouche de distribution selon la revendication 1 ou 2, dans laquelle une unité d'actionnement (40) est reliée à l'une des extrémités de l'élément de manoeuvre (12), de manière à coopérer avec ledit élément de manoeuvre (12).

4. Cartouche de distribution selon la revendication 3, dans laquelle l'unité d'actionnement (40) inclut un entraînement de fermeture dévolu à une robinetterie à fermeture automatique.

5. Cartouche de distribution selon la revendication 3, dans laquelle l'unité d'actionnement inclut un entraînement de réglage dévolu à une robinetterie actionnée électriquement.

6. Cartouche de distribution selon l'une des revendications précédentes, dans laquelle un groupe structurel mélangeur (56) mécanique, ou un groupe structurel mélangeur thermostatique, est relié à l'autre extrémité (12") de l'élément de manoeuvre en vue de coopérer avec ledit élément de manoeuvre (12).

7. Cartouche de distribution selon la revendication 6, incluant un groupe structurel mélangeur (56) pourvu d'un composant structurel mélangeur (56c) rotatif, l'élément distributeur mobile (22), et ledit composant structurel mélangeur (56c) rotatif, pouvant être déplacés par l'intermédiaire de l'élément de manoeuvre (12) en ce sens que ce dernier transmet, respectivement, des mouvements linéaires audit élément distributeur mobile (22) et un mouvement rotatoire audit composant structurel mélangeur (56c) rotatif.

8. Cartouche de distribution selon la revendication 4, dans laquelle l'entraînement de fermeture (40) inclut un amortisseur (41, 43) comprenant un organe mobile d'amortissement (43), relié à l'élément de manoeuvre (12) et pouvant être dévié d'une position initiale à une position finale, et un accumulateur de force (44) conçu pour appliquer, audit organe d'amortissement (43), une force de rappel en direction de sa position initiale ; ledit entraînement de fermeture (40) étant réalisé de façon telle que ledit organe d'amortissement (43), dévié vers la position finale, soit automatiquement animé d'un mouvement rétrograde vers une position initiale par la force de rappel développée par ledit accumulateur de force (44), en opposition à la résistance de l'amortisseur (41, 43), sachant que, lors de son mouvement rétrograde, l'élément de manoeuvre (12) accomplit tout d'abord une course à vide avant qu'un organe d'entraînement (12"), prévu sur ledit élément de manoeuvre (12), ne provoque un mouvement de fermeture de l'élément distributeur (22).

9. Cartouche de distribution selon la revendication 8, dans laquelle l'amortisseur (41, 43) est réalisé de telle sorte que sa force d'amortissement soit au moins diminuée dans l'enchaînement de la course à vide.

10. Cartouche de distribution selon la revendication 8 ou 9, dans laquelle l'amortisseur (41, 43) inclut un piston hydraulique (43) qui se déplace dans un cylindre hydraulique (41) empli d'un fluide hydraulique et qui refoule du fluide hydraulique lors d'un mouvement rétrograde vers la position initiale, lequel fluide est alors contraint de circuler par une zone de rétrécissement (47, 49, 50).

11. Cartouche de distribution selon les revendications 9 et 10, dans laquelle le cylindre hydraulique (41) présente un diamètre élargi dans une région (41') précédant la position initiale, ce qui a pour effet de diminuer sa force d'amortissement dans cette région.

12. Cartouche de distribution selon la revendication 11, dans laquelle la zone de rétrécissement (47, 49, 50) parcourt l'élément de manoeuvre (12) et est formée, de préférence, par un alésage axial (47) dudit élément de manoeuvre dans lequel est insérée une vis de réglage (45) au moyen de laquelle la section transversale de ladite zone de rétrécissement (47, 49, 50) peut être régulée.

13. Cartouche de distribution selon l'une des revendications 10 à 12, dans laquelle le piston (43) renferme au moins une vanne unidirectionnelle, par laquelle un liquide hydraulique peut s'écouler lors d'un mouvement du piston dans une direction d'ouverture ; ou dans laquelle au moins un segment (46) de piston est monté flottant de façon telle qu'il vienne s'appliquer de manière étanche contre une surface d'étanchement, sur le bord du piston, lors d'un mouvement dudit piston (43) dans une direction de fermeture, et qu'il puisse être balayé périphériquement par du liquide hydraulique lors d'un mouvement dudit piston (43) dans ladite direction d'ouverture.

14. Cartouche de distribution selon l'une des revendications 10 à 13, dans laquelle l'élément de manoeuvre (12) est réalisé sous la forme d'une tige de piston reliée au piston (43) avec liberté de rotation, mais toutefois de manière rigide dans le sens axial.

15. Cartouche de distribution selon la revendication 8, ou l'une des revendications 9 à 14 dépendant de la revendication 8, dans laquelle l'organe d'entraînement (12") est réalisé sous la forme d'un tenon profilé permettant une liaison par enfichage, à constance rotatoire, avec un groupe structurel (56) supplémentaire.

16. Cartouche de distribution selon l'une des revendications précédentes, dans laquelle l'unité de distribution (20) est réalisée sous la forme d'une vanne à trois disques en céramique, et l'élément distributeur mobile (22) est un disque obturateur mobile interposé entre des disques obturateurs fixes (25, 26), respectivement situés côté afflux et côté sortie, sachant que les deux disques obturateurs fixes (25, 26) comportent un, ou plusieurs orifices de passage (25', 26') coïncidant mutuellement, et que le disque obturateur mobile (22) peut être mû entre une position de fermeture, dans laquelle il bloque un écoulement d'eau entre lesdits orifices de passage respectivement coïncidents, et une position d'ouverture dans laquelle il autorise un écoulement d'eau.

17. Cartouche de distribution selon la revendication 16, dans laquelle le disque obturateur mobile (22) est muni, sur sa face pointant vers le disque obturateur fixe (26) situé côté sortie, d'au moins une surface d'équilibrage de pression vers laquelle, lorsque la vanne est à l'état fermé, une liaison fluidique est instaurée, par l'intermédiaire d'au moins un canal de détente (23'), avec au moins l'un des orifices de passage (25') pratiqués dans le disque obturateur (25) situé côté afflux.
